# EUROPÄISCHE PATENTANMELDUNG

(11) **EP 4 678 932 A1**
(43) Veröffentlichungstag der Anmeldung: **14.01.2026**
(21) Anmeldenummer: 25177044.2
(22) Anmeldetag: 16.05.2025
(51) Int. Cl.: F16D 27/118

(54) **ELEKTROMAGNETISCH SCHALTBARE FORMSCHLUSSKUPPLUNG SOWIE VERFAHREN ZUR POSITIONSBESTIMMUNG**

(30) Priorität: 11.07.2024 DE 102024119790
(71) Anmelder: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); KUCHAREK, Sebastian, 86956 Schongau (DE); LAUTENSACH, Marco, 86956 Schongau (DE)
(74) Vertreter: Prinz & Partner mbB

(57) **Zusammenfassung**

Eine elektromagnetisch schaltbare Formschlusskupplung ist gezeigt, mit einem beweglichen Teil, das drehfest auf einer Welle angeordnet ist und entlang der Welle linear zwischen einer Einkupplungsposition und einer Auskupplungsposition verschiebbar ist. Die Formschlusskupplung weist wenigstens ein feststehendes Teil, das koaxial zur Welle ausgerichtet ist, und einen Stator mit wenigstens einer bestrombaren Antriebsspule (30) zur Verstellung des beweglichen Teils entlang der Welle auf, wobei in der Einkupplungsposition ein Formschluss zwischen dem beweglichen Teil und dem feststehenden Teil und damit eine Drehverbindung zwischen der Welle und dem feststehenden Teil vorliegt. Ferner ist eine angrenzend an das bewegliche Teil angeordnete, stationäre Sensorvorrichtung (42) vorhanden, die wenigstens einen Hall-Sensor (44) und wenigstens einen den wenigstens einen Hall-Sensor (44) magnetisch einschließenden Magnet (46) umfasst. Die Sensorvorrichtung (42) ist in einer axialen oder radialen Richtung mit einem Spalt beabstandet zu dem beweglichen Teil angeordnet und so eingerichtet, dass sie eine Axialbewegung des beweglichen Teils über eine Änderung eines Feldlinienwinkels eines durch den Magneten (46) erzeugten Magnetfelds erfasst. Des Weiteren ist ein Verfahren zur Positionsbestimmung des beweglichen Teils offenbart.

## Beschreibung

Die Erfindung betrifft eine elektromagnetisch schaltbare Formschlusskupplung. Des Weiteren betrifft die Erfindung ein Verfahren zur Positionsbestimmung eines axial beweglichen Teils einer elektromagnetisch schaltbaren Formschlusskupplung.

Soll temporär Drehmoment von einer Welle auf eine andere, koaxial dazu ausgerichtete Welle übertragen werden, ohne dass diese beiden Wellen dauerhaft verbunden werden, kommen typischerweise Kupplungen zum Einsatz. Hierbei wird zwischen reibschlüssigen und formschlüssigen Kupplungen unterschieden. Die vorliegende Erfindung betrifft formschlüssige Kupplungen, die hier als Formschlusskupplungen bezeichnet werden. Zu den Formschlusskupplungen zählen bspw. Zahnkupplungen sowie Klauenkupplungen.

Für Formschlusskupplungen werden häufig verschiebbare Schaltmuffen eingesetzt. Diese weisen eine oder auch mehrere verschiedene Verzahnungen auf, welche in Gegenverzahnungen greifen, sodass ein Formschluss entsteht, über den Drehmoment von einer ersten Welle auf eine zweite Welle übertragen werden kann.

Aus dem Stand der Technik sind elektromagnetische Kupplungen bekannt, bei denen die Verstellung der Schaltmuffe über eine Antriebsspule erfolgt, die eine magnetische Kraft auf die Schaltmuffe ausübt. Bei derartigen Kupplungen kann die Schaltmuffe ausgehend von einer Auskupplungsposition in eine Richtung bewegt werden, um die Schaltmuffe in Eingriff mit einem Kupplungskörper zu bringen. Man spricht dabei von einer einseitigen Kupplung.

Außerdem sind zweiseitige Kupplungen bekannt, bei denen die Schaltmuffe ausgehend von einer Auskupplungsposition in entgegengesetzte Richtungen bewegt werden kann, um die Schaltmuffe in Eingriff mit unterschiedlichen, axial beabstandeten Kupplungskörpern zu bringen.

Insbesondere bei elektromagnetisch schaltbaren Formschlusskupplungen ist eine Steuerung vorgesehen, die eine Verschiebung der Schaltmuffe über Steuerbefehle steuert. Für einen bestmöglichen Kupplungsverlauf ist es dabei notwendig, die aktuelle Position der Schaltmuffe, welche auch als Kupplungsposition bezeichnet wird, zu kennen. Dies liegt daran, dass für jeden an die elektromagnetisch schaltbare Formschlusskupplung übertragenden Steuerbefehl zunächst der aktuelle Kupplungszustand analysiert werden sollte, sodass die Steuerung jederzeit die Position der Schaltmuffe abfragen können sollte.

Im Stand der Technik wird der Schaltzustand oder auch die Kupplungsposition der Schaltmuffe über indirekte Messungen bestimmt, beispielsweise durch den Stromzustand des Stators oder der Drehzahl der zu verbindenden Wellen.

Ebenfalls ist es bekannt, zur Positionserfassung Hall-Sensoren zu verwenden, die die Position basierend auf der Magnetfeldänderung bestimmen. Die dafür benötigten Sensorvorrichtungen weisen jedoch einen komplexen Aufbau auf, und benötigen dementsprechend vergleichsweise viel Bauraum.

Um die Endlage der Schaltmuffe, das heißt eine Einkupplungs- oder Auskupplungsposition der Schaltmuffe zu bestimmen, können auch Schalter eingesetzt werden. Der Schalter wird dabei durch ein extra vorgesehenes Betätigungsteil betätigt, wenn die Schaltmuffe sich in der Einkupplungsposition befindet.

Alternativ zu einem Schalter kann auch ein Wegmesssystem eingesetzt werden, welches ebenfalls über ein zusätzliches Bauteil betätigt wird.

Somit zeichnen die sich im Stand der Technik bekannten Methoden zum Erfassen der Position der Schaltmuffe dadurch aus, dass es sich um indirekte Messungen handelt, die ein zusätzliches, abzutastendes oder betätigendes Bauteil benötigen. Eine direkte und genaue Bestimmung an der eigentlichen Kupplungsposition ist somit nicht möglich, sondern es werden immer zusätzliche Bauteile benötigt.

Hinzu kommt, dass die Erfassung der Position der Schaltmuffe üblicherweise in axialer Richtung stattfindet, sodass sich der benötigte Bauraum für die Formschlusskupplung erhöht.

Durch die zusätzlich benötigten Bauteile sowie den benötigten Bauraum erhöhen sich außerdem die Herstellkosten der Formschlusskupplung.

Außerdem benötigen diese Messmethoden oftmals eine genaue Kalibrierung des Sensors gegenüber der Messstelle, was üblicherweise sehr aufwendig und somit kostenintensiv ist.

Es ist daher eine Aufgabe der Erfindung, eine elektromagnetisch schaltbare Formschlusskupplung bereitzustellen, bei der die Bestimmung der Kupplungsposition über eine direkte Messung und zeitlich sehr schnell und genau stattfindet. Es ist außerdem eine Aufgabe, den benötigten Bauraum sowie die Anzahl der benötigten Bauteile möglichst gering zu halten. Des Weiteren ist es eine Aufgabe, ein Verfahren zum Bestimmen der Kupplungsposition bereitzustellen, das möglichst genaue Positionen bestimmt.

Diese Aufgabe wird erfindungsgemäß gelöst durch eine elektromagnetisch schaltbare Formschlusskupplung, mit einem axial beweglichen, angetriebenen Teil, das drehfest auf einer Welle angeordnet ist und entlang der Welle linear zwischen einer Einkupplungsposition und einer Auskupplungsposition verschiebbar ist. Des Weiteren weist die Formschlusskupplung wenigstens ein axial feststehendes, anzutreibendes Teil, das koaxial zur Welle ausgerichtet ist, und einen Stator mit wenigstens einer bestrombaren Antriebsspule zur Verstellung des beweglichen Teils entlang der Welle auf, wobei in der Einkupplungsposition ein Formschluss zwischen dem beweglichen Teil und dem feststehenden Teil und damit eine Drehverbindung zwischen der Welle und dem feststehenden Teil vorliegt. Die Formschlusskupplung umfasst außerdem eine angrenzend an das bewegliche Teil angeordnete, stationäre Sensorvorrichtung, die wenigstens einen Hall-Sensor und wenigstens einen Magnet umfasst, der neben und bleibend ortsfest zum wenigstens einen Hall-Sensor angeordnet ist. Dabei ist die Sensorvorrichtung in einer axialen oder radialen Richtung mit einem Spalt beabstandet zu dem beweglichen Teil angeordnet und der Hall-Sensor ist so ausgebildet, dass er eine Axialbewegung des beweglichen Teils über eine Änderung eines Feldlinienwinkels eines durch den Magneten erzeugten Magnetfelds erfassen kann.

In anderen Worten wird wenigsten ein Hall-Sensor in einem Magnetfeld von einem Magneten so in der Formschlusskupplung angeordnet, dass der Hall-Sensor eine Veränderung des Feldlinienwinkels aufgrund der durch die Axialbewegung des beweglichen Teils resultierende Magnetfeldänderung erkennen kann, wobei eine Steuerung basierend auf diesen Daten die Kupplungsposition des beweglichen Teils bestimmen kann. Da es sich um eine direkte Messung handelt, werden keine zusätzlichen Bauteile benötigt, wodurch die Herstellungskosten gesenkt werden. Außerdem sind für Feldlinienwinkelmessungen verwendete Hall-Sensoren gängige Sensoren, die günstig erworben werden können, schnell reagieren und wenig Platz benötigen. Durch die Sensorvorrichtung mit dem Hall-Sensor kann die genaue Position des beweglichen Teils somit ohne bzw. unabhängig vom Spulenstrom erfasst werden.

Zum Bestimmen der Position des beweglichen Teils wird also die Änderung der Feldlinienwinkel des Magnetfelds genutzt, die basierend auf dem Hall-Effekt gemessen werden kann. Das heißt, es wird eine Änderung einer elektrischen Spannung in einem stromdurchflossenen Leiter gemessen, der sich in einem Magnetfeld befindet. Durch die Änderung des Magnetfelds bei einer Axialbewegung des beweglichen Teils kommt es genau zu solch einer Spannungsänderung, basierend auf der die Änderung der Feldlinienwinkel bestimmt werden kann. Indem der Hall-Sensor magnetisch von wenigstens einem Magnet eingeschlossen ist, kann der Einfluss des Magnetfelds der Antriebsspule, welcher zu unkontrollierten Änderungen des Hall-Effekts führen kann verhindert bzw. gemindert werden. Zusätzlich kann durch diese Anordnung auf einen auf dem beweglichen Teil befestigten Permanentmagneten verzichtet werden. Dadurch können die Produktionskosten deutlich gesenkt werden, da es sich bei einem für das bewegliche Teil geeigneten ringförmigen Permanentmagneten um eine Sonderanfertigung handelt, was die Produktionskosten üblicherweise deutlich erhöht. Die Sensorvorrichtung kann zusätzlich genauere Ergebnisse bezüglich der Positionsbestimmung des beweglichen Teils liefern, da die Feldlinienwinkel mit einer Genauigkeit von bis zu wenigen Milligrad (m°) bestimmt werden können.

Bei dem beweglichen Teil kann es sich um eine Schaltmuffe oder einen Anker handeln, während das feststehende Teil als Kupplungskörper ausgebildet sein kann. Der Anker und/oder die Schaltmuffe sind dabei vorzugsweise aus einem ferromagnetischen Metall gefertigt.

Vorzugsweise umfasst der Hall-Sensor eine Auswerteeinheit, die eingerichtet ist, den Feldlinienwinkel des durch den Magneten erzeugten Magnetfelds zu bestimmen. Des Weiteren kann die Auswerteeinheit eingerichtet sein, den bestimmten Feldlinienwinkel an eine Steuerung der elektromagnetisch schaltbaren Formschlusskupplung weiterzuleiten. Dementsprechend ist also eine Auswerteeinheit, vorzugsweise in Form eines Mikroprozessors, in der Sensorvorrichtung, bevorzugt sogar direkt in dem Hall-Sensor, integriert. Somit kann der Hall-Sensor direkt den Feldlinienwinkel ausgeben, ohne dass von der Steuerung der Formschlusskupplung zunächst der Feldlinienwinkel bestimmt werden muss.

Bevorzugt werden somit Hall-Sensoren mit einer integrierten Auswerteeinheit verbaut. Alternativ kann jedoch auch ein herkömmlicher Hall-Sensor verwendet werden, der mit einem Mikroprozessor und/oder der Steuerung verbunden ist, so dass der Feldlinienwinkel von dem Mikroprozessor und/oder der Steuerung berechnet wird. In dem Fall, dass der Hall-Sensor mit einem Mikroprozessor verbunden ist, ist dieser vorzugsweise ebenfalls in der Sensorvorrichtung eingebettet, so dass eine Einheit aus Hall-Sensor, Mikroprozessor und vorzugsweise auch Steuerung verbaut werden kann.

Gemäß einer Ausführungsform umfasst der Hall-Sensor zwei Messpunkte. Durch das Vorsehen von zwei Messpunkten kann ein genaueres Ergebnis des Feldlinienwinkels ausgegeben werden, so dass auch die daraus berechnete Position des beweglichen Teils eine höhere Genauigkeit aufweist.

Gemäß einer weiteren Ausführungsform umfasst die Sensorvorrichtung zwei Magnete, wobei der Hall-Sensor zwischen den beiden Magneten angeordnet ist. Durch das Vorsehen von zwei Magneten kann ein stärkeres Magnetfeld erzeugt werden, in dem der Hall-Sensor angeordnet ist. Da das Magnetfeld von zwei Magneten stärker ist als von einem Magnet, ist auch die Änderung des Feldlinienwinkels bei zwei Magneten größer, wodurch auch hier ein genaueres Messergebnis bereitgestellt werden kann. Zusätzlich wird der Hall-Sensor durch das Vorsehen von zwei Magneten besser von dem Magnetfeld des Stators abgeschirmt und somit das vom Hall-Sensor bereitgestellte Signal verstärkt, so dass eine insgesamt höhere Auflösung erreicht werden kann.

Vorzugsweise haben die zwei Magnete jeweils eine magnetische Achse und sind schräg in Bezug auf eine Mittelachse des Hall-Sensors angeordnet. Dabei sind die magnetischen Achsen aufeinander zugerichtet und relativ zu der Mittelachse in einem spitzen Winkel angeordnet. Bevorzugt handelt es sich dabei um einen spitzen Winkel mit weniger als 45°. Die unsymmetrische Ausrichtung der magnetischen Achsen führt zu der bestmöglichen Magnetfeldausrichtung und dementsprechend zu einem starken Magnetfeld, um die Feldlinienwinkel und insbesondere die Änderung der Feldlinienwinkel möglichst genau zu bestimmen.

Gemäß einer bevorzugten Ausführungsform sind die Magnete Permanentmagnete oder Elektromagnete. Dementsprechend handelt es sich um gängige Magnete, die leicht zu erwerben und dementsprechend kostengünstig sind.

Gemäß einer weiteren Ausführungsform umfasst die Sensorvorrichtung wenigstens zwei Hall-Sensoren, wobei vorzugsweise jedem der Hall-Sensoren wenigstens ein Magnet zugeordnet ist, der an den zugeordneten Hall-Sensor angrenzt. Somit können zusätzliche Messpunkte bereitgestellt werden, die die Messgenauigkeit bzw. das Messergebnis verbessern und dementsprechend eine höhere Auflösung für die Positionsbestimmung des beweglichen Teils bereitstellen.

Vorzugsweise ist die Sensorvorrichtung in einem Sensorgehäuse aufgenommen, das an einem Statorgehäuse angebracht ist. Dadurch können Bauraumprobleme verhindert werden, da der Sensor nicht zwischen dem beweglichen Teil und dem feststehenden Teil oder direkt neben oder über dem feststehenden Teil angeordnet werden muss.

Das Sensorgehäuse besteht vorzugsweise aus einem Kunststoff und weist eine Halterung auf, über die das Sensorgehäuse am Statorgehäuse befestigt werden kann. Dafür kann die Halterung beispielsweise mit dem Statorgehäuse verschraubt, geklebt, verschweißt oder vernietet werden.

Gemäß einer bevorzugten Ausführungsform sind wenigstens zwei Sensorvorrichtungen vorgesehen, wobei die wenigstens zwei Sensorvorrichtungen in Umfangsrichtung zueinander versetzt angeordnet sind. Somit kann eine ungleiche Verschiebung des beweglichen Teils, beispielsweise durch ein Kippen des beweglichen Teils, frühzeitig erkannt werden. Dementsprechend kann auch das bewegliche Teil so angesteuert werden, dass die Kippbewegung neutralisiert wird, oder es kann kurzzeitig schnell ausgekuppelt und wieder eingekuppelt werden.

Gemäß einer weiteren Ausführungsform ist jedem Magnet ein weichmagnetisches Material zugeordnet, wobei das weichmagnetische Material neben dem Magneten auf der dem Hall-Sensor gegenüberliegenden Seite oder unter dem Magneten auf dessen zu dem beweglichen Teil weisenden Seite angeordnet ist. Das weichmagnetische Material dient der Magnetflussführung, und kann somit das Signal des Hall-Sensors verstärken und unerwünschte Änderungen des Hall-Effekts aufgrund des vom Stator erzeugten Magnetfelds verhindern. Somit bietet das weichmagnetische Material eine zusätzliche Abschirmung von dem Magnetfeld der Antriebsspule und verstärkt das Magnetfeld des in der Sensorvorrichtung angeordneten Magneten, wodurch es zu einer möglichst großen Änderung der Feldlinienwinkel kommt.

Die Aufgabe wird erfindungsgemäß auch gelöst durch ein Verfahren zur Positionsbestimmung eines beweglichen Teils einer elektromagnetisch schaltbaren Formschlusskupplung, wie sie vorhergehend beschrieben wurde. Dabei umfasst das Verfahren die folgenden Schritte:
- Erfassen einer Hall-Spannung mittels eines Hall-Sensors;
- Berechnen eines Feldlinienwinkels mittels einer im Hall-Sensor integrierten Auswerteeinheit;
- Weiterleiten des Feldwinkels an eine Steuerung der elektromagnetisch schaltbaren Formschlusskupplung; und
- Zuordnung einer eindeutigen Position des beweglichen Teils basierend auf dem berechneten Feldlinienwinkel mittels der Steuerung.

Dementsprechend ist der Grundgedanke, dass die Positionsbestimmung auf der Änderung der Feldlinienwinkel basiert, welcher von der Sensorvorrichtung an die Steuerung weitergeleitet wird, und somit eine möglichst genaue Position des beweglichen Teils ermittelt werden kann.

Wie bereits vorhergehend ausgeführt, verursacht die Axialbewegung des beweglichen Teils eine Änderung des Magnetfelds. Dadurch ändert sich auch der Magnetfluss durch den Hall-Sensor, so dass eine Hall-Spannung detektiert wird. Basierend auf der Hall-Spannung kann die Auswerteeinheit, welche z.B. durch einen Mikroprozessor realisiert ist, den Feldlinienwinkel bestimmen und an die Steuerung weiterleiten.

Optional wird die Position des beweglichen Teils von mehreren Hall-Sensoren, insbesondere von entlang des Umfangs eines Stators zueinander versetzten Hall-Sensoren, bestimmt. Die von den verschiedenen Hall-Sensoren bestimmten Positionen werden von der Steuerung der Formschlusskupplung miteinander verglichen, so dass eine mögliche Fehlstellung des beweglichen Teils schnellstmöglich behoben werden kann, beispielsweise durch eine entsprechende Ansteuerung der Formschlusskupplung oder ein kurzzeitiges Aus- und wieder Einkuppeln.

Gemäß einer Weiterbildung, wird der Feldlinienwinkel für jede Position des beweglichen Teils der elektromagnetisch schaltbaren Formschlusskupplung bestimmt. Somit ist der Steuerung der Formschlusskupplung zu jeder Zeit die aktuelle Position des beweglichen Teils hinterlegt und jegliche Kupplungsvorgänge können optimiert und ohne Verzögerung durchgeführt werden.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 eine Schnittdarstellung einer erfindungsgemäßen elektromagnetisch schaltbaren Formschlusskupplung mit einer Schaltmuffe in der Auskupplungsposition;
- Figur 2 eine perspektivische Teilansicht der in Figur 1 gezeigten Formschlusskupplung im Bereich der Befestigung einer Sensorvorrichtung;
- Figur 3 eine perspektivische Detailansicht der in Figur 2 gezeigten Sensorvorrichtung;
- Figur 4 eine schematische Schnittansicht der in Figuren 2 und 3 gezeigten Sensorvorrichtung;
- Figur 5 eine weitere perspektivische Detailansicht der in Figuren 2 bis 4 gezeigten Sensorvorrichtung;
- Figuren 6A bis 6C eine schematische Darstellung eines Kupplungsvorgangs, wobei in Figur 6A eine Auskupplungsposition, in Figur 6B eine Zwischenposition und in Figur 6C eine Einkupplungsposition zu sehen ist;
- Figuren 7A und 7B eine schematische Darstellung des Magnetfelds in verschiedenen Kupplungspositionen, wobei Figur 7A das Magnetfeld der in Figur 6A gezeigten Auskupplungsposition und Figur 7B das Magnetfeld der in Figur 6C gezeigten Einkupplungsposition zeigen;
- Figur 8 eine schematische Detailansicht des in Figur 7A gezeigten Magnetfelds; und
- Figur 9 eine zweite Ausführung der bei der Erfindung einsetzbaren Sensorvorrichtung.

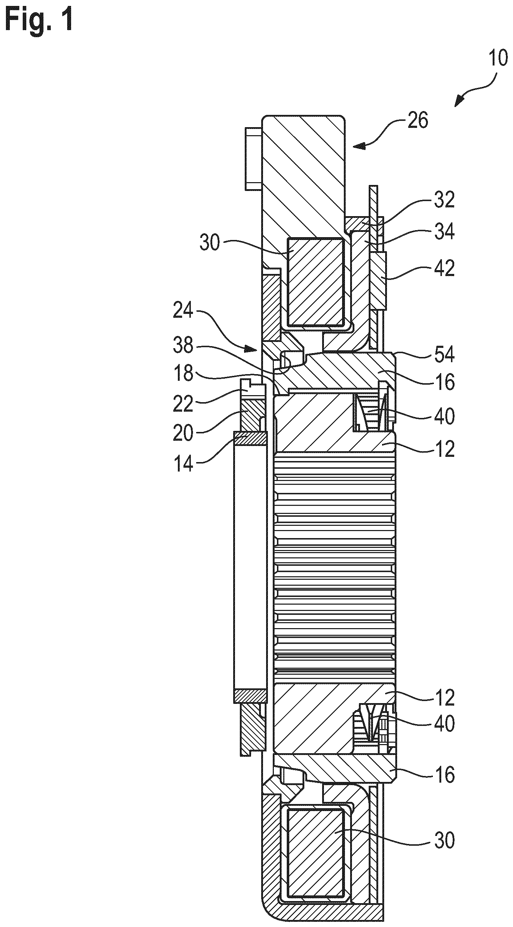

Figur 1 zeigt eine elektromagnetisch schaltbare Formschlusskupplung 10, die dazu dient, durch Öffnen und Schließen eine erste Welle 12 und eine koaxial zur ersten Welle 12 ausgerichtete zweite Welle 14 miteinander zu koppeln.

Bei der in Figur 1 gezeigten Formschlusskupplung 10 handelt es sich um eine elektromagnetische Zahnkupplung mit radial nach innen und radial nach außen ragenden Zähnen, die ineinandergreifen.

Bei der elektromagnetisch schaltbaren Formschlusskupplung 10 kann es sich jedoch auch um jegliche andere Art von Verzahnungskupplung handeln. Wichtig ist lediglich, dass die Verbindung durch einen Formschluss hergestellt wird.

Die elektromagnetisch schaltbare Formschlusskupplung 10 umfasst ein axial bewegliches, angetriebenes Teil 15, das in diesem Ausführungsbeispiel der Formschlusskupplung 10 eine Schaltmuffe 16 ist, die seitlich entlang des Umfangs eine erste Verzahnung 18 aufweist.

Weiter ist die Schaltmuffe 16 drehfest auf einer ersten Welle 12 angeordnet und axial entlang dieser zwischen einer Einkupplungsposition und einer Auskupplungsposition längs einer die Welle 12 und die Schaltmuffe 16 koppelnde Verzahnung 19 verstellbar. Figur 1 zeigt die Schaltmuffe 16 in der Auskupplungsposition.

Die zweite Welle 14 ist ein axial feststehendes, anzutreibendes Teil 21, das in diesem Ausführungsbeispiel der Formschlusskupplung 10 ein singulärer Kupplungskörper 20 ist, zugeordnet, der drehfest mit der zweiten Welle 14 gekoppelt ist.

Der Kupplungskörper 20 weist eine zweite Verzahnung 22 auf, die entlang des Außenumfangs des Kupplungskörpers 20 angeordnet ist. Weiter ist der Kupplungskörper 20 koaxial zur ersten Welle 12 ausgerichtet.

Es ist aber auch denkbar, dass der Kupplungskörper 20 einen Teil der zweiten Welle 14 bildet und mit dieser einstückig ausgebildet ist.

Die erste Verzahnung 18 und die zweite Verzahnung 22 bilden zusammen eine Kupplungsverzahnung 24 und dienen dazu, in der Einkupplungsposition der Schaltmuffe 16 einen Formschluss zwischen der Schaltmuffe 16 und dem Kupplungskörper 20 zu bilden.

Dabei kann die aus der ersten und zweiten Verzahnung 18, 22 gebildete Kupplungsverzahnung 24 zumindest an den Zähnen der ersten Verzahnung 18 und/oder an den Zähnen der zweiten Verzahnung 22 Hinterschnitte aufweisen, die derart ausgebildet sind, dass bei einer Schaltmuffe 16 in der Einkupplungsposition und bei einer Drehmomentbeaufschlagung der Formschlusskupplung 10 ein zusätzliches Verschieben der Schaltmuffe 16 hin zum Kupplungskörper 20 stattfindet, weil die Umfangskraft in eine axiale Verschiebekraft umgesetzt wird. Dies kann beispielsweise durch sich keilförmig aufweitende Hinterschnitte erreicht werden, sodass eine Keilwirkung in Richtung Einkupplungsposition entsteht, wenn ein Drehmoment übertragen wird.

Darüber hinaus ist ein Stator 26 vorgesehen, der ein Statorgehäuse 28 umfasst und eine Antriebsspule 30, die zumindest teilweise im Statorgehäuse 28 aufgenommen ist.

Das Statorgehäuse 28 umfasst einen Gehäusetopf 32, der sich entlang des Umfangs der Antriebsspule 30 sowie entlang einer Stirnseite der Antriebsspule 30 erstreckt.

Weiter weist das Statorgehäuse 28 einen Gehäusering 34 auf, der entlang des Umfangs der Antriebsspule 30 verläuft und sich zusätzlich auf der dem Gehäusetopf 32 entgegengesetzten Stirnseite der Antriebsspule 30 erstreckt.

Die Antriebsspule 30 dient zum linearen Verstellen der Schaltmuffe 16 entlang der ersten Welle 12 in Richtung der Einkupplungsposition hin zum Kupplungskörper 20.

Alternativ ist es auch denkbar, dass die Antriebsspule 30 zur Verstellung der Schaltmuffe 16 entlang der ersten Welle 12 hin zur Auskupplungsposition der Schaltmuffe 16 dient.

Die Verstellung der Schaltmuffe 16 erfolgt über eine magnetische Kraft, die bei Bestromung der Antriebsspule 30 auf die Schaltmuffe 16 ausgeübt wird.

Um die Schaltmuffe 16 in die Auskupplungsposition zurück zu verschieben, ist eine elastische Federeinheit 40 vorgesehen, über die die Schaltmuffe 16 in axialer Richtung verschiebbar mit der ersten Welle 12 gekoppelt ist.

Die elastische Federeinheit 40 ist dabei derart zwischen der Schaltmuffe 16 und der ersten Welle 12 angeordnet, dass eine Relativverschiebung der Schaltmuffe 16 in axialer Richtung hin zur Einkupplungsposition ein Einfedern der elastischen Federeinheit 40 zur Folge hat. Hierdurch entsteht eine Rückstellkraft, die die erste elastische Federeinheit 40 auf die Schaltmuffe 16 ausübt.

Die Rückstellkraft wirkt dabei entgegengesetzt der magnetischen Kraft der Antriebsspule 30.

Die elastische Federeinheit 40 ist innerhalb einer Ausnehmung in der Welle 12 angeordnet und drückt axial einerseits gegen eine Wand an der Welle 12 und andererseits gegen eine an der Schaltmuffe 16 befestigte Scheibe 41.

Dementsprechend ist die elastische Federeinheit 40 in einem Raum untergebracht, der radial innenseitig durch die erste Welle 12 und radial außenseitig durch die Schaltmuffe 16 begrenzt ist.

Bei der Federeinheit 40 kann es sich bevorzugt um eine Wellenfeder oder ein Wellenfederpaket handeln.

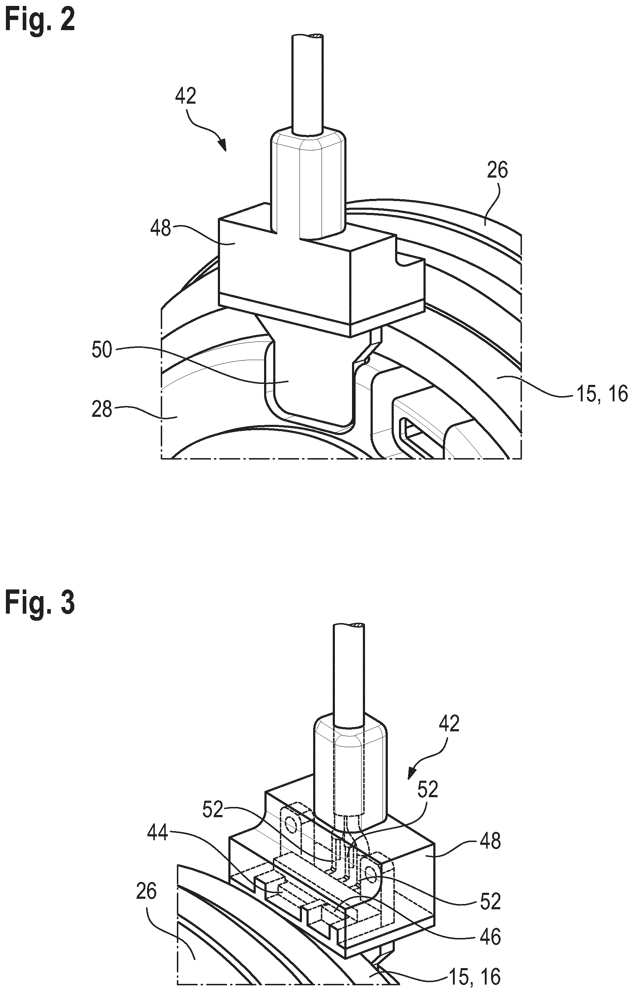

Wie insbesondere in der Detailansicht in Figuren 2 und 3 zu sehen ist, umfasst die Formschlusskupplung 10 in der hier gezeigten ersten Ausführungsform außerdem eine Sensorvorrichtung 42.

Die Sensorvorrichtung 42 umfasst, wie insbesondere in Figuren 3 bis 5 zu sehen ist, wenigstens einen Hall-Sensor 44 sowie einen seitlich neben dem Hall-Sensor 44 angeordneten, ortsfesten Magneten 46.

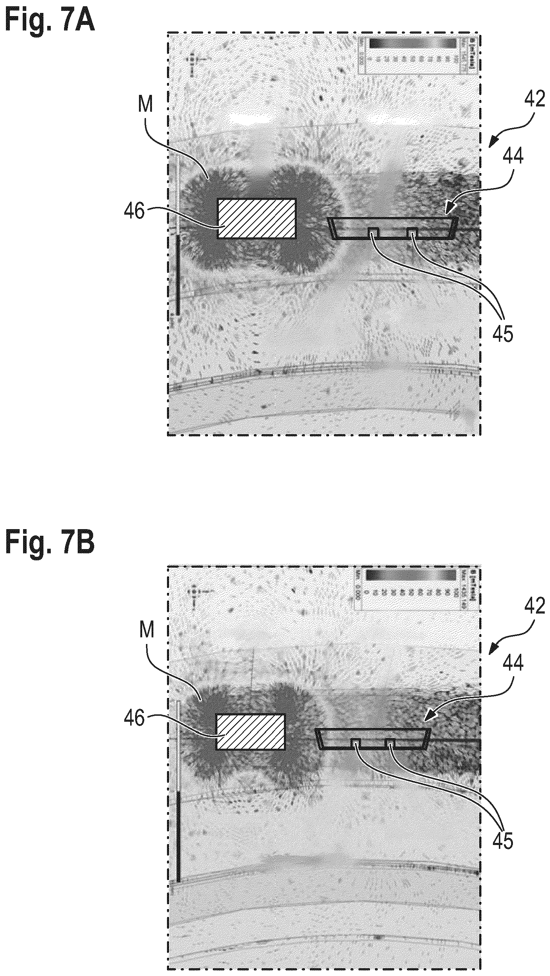

Vorzugsweise weist der Hall-Sensor 44 zwei Messpunkte 45 (siehe Figur 7A) auf, um eine möglichst genaue Positionsbestimmung zu gewährleisten.

Bei dem Magnet handelt es sich um einen Permanentmagnet oder einen Elektromagnet, der dazu dient, ein stabiles Magnetfeld M für den Hall-Sensor 44 bereitzustellen. Dafür ist der Magnet 46 bleibend ortsfest neben dem Hall-Sensor 44 angeordnet.

Um ein möglichst starkes Magnetfeld M und eine bestmögliche Anordnung des Hall-Sensors 44 in dem Magnetfeld M zu gewährleisten, ist der Magnet 46 vorzugsweise in einem Winkel zu einer Mittelachse A des Hall-Sensors 44 angeordnet.

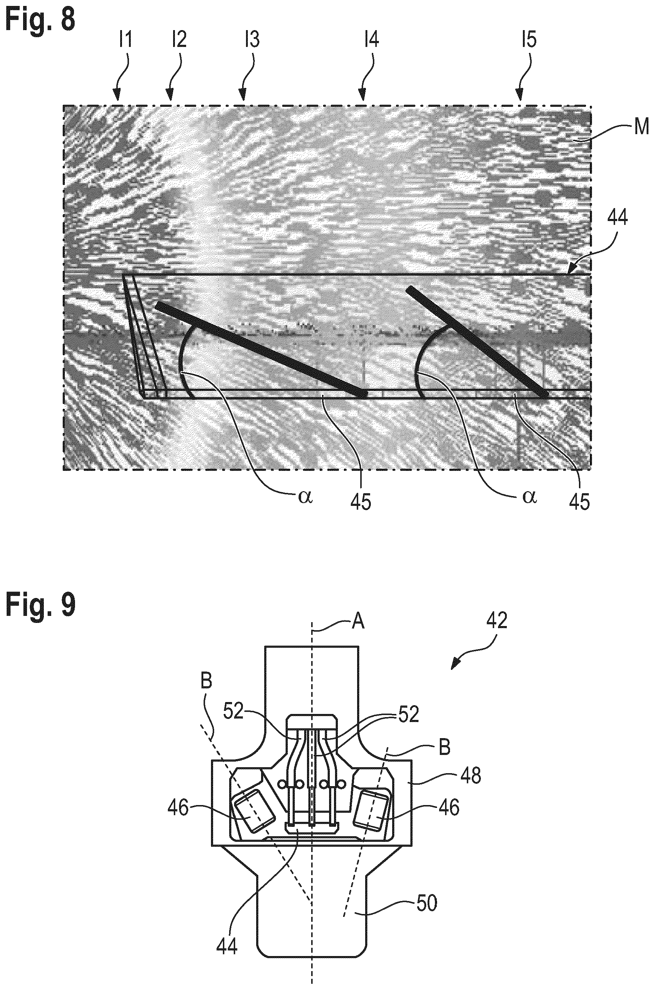

Insbesondere in Figur 8 ist zu sehen, dass die Intensität I1, I2, I3, I4, I5 des Magnetfelds M mit einer zunehmenden Entfernung zum Magnet 46 abnimmt.

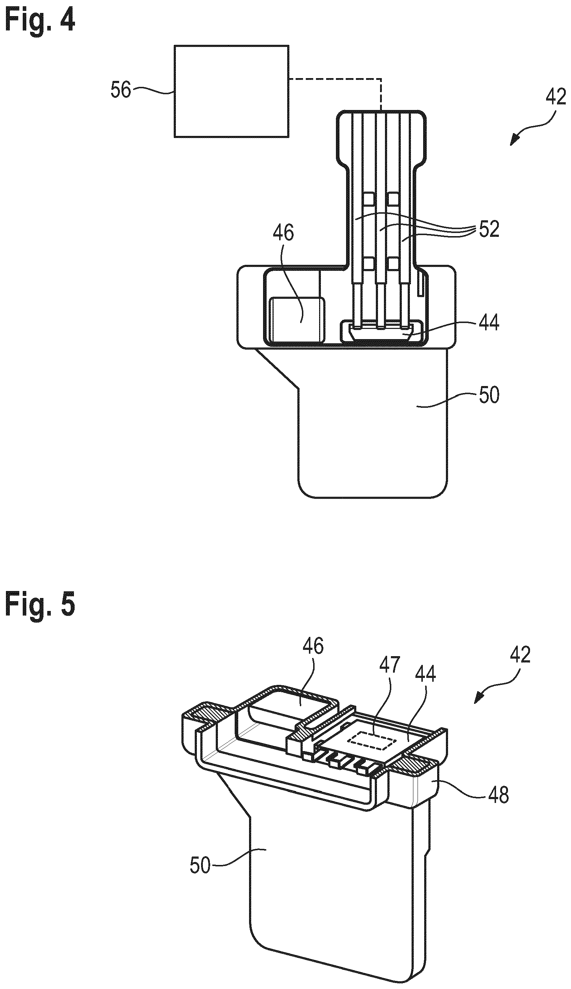

Wie vor allem in Figur 4 gut zu sehen ist, ist der Hall-Sensor 44 über drei Leitungen 52 mit einer Steuerung 56 der Formschlusskupplung 10 verbunden.

In den Hall-Sensor 44 ist eine Auswerteeinheit 47 integriert. Bei der Auswerteeinheit 47 kann es sich beispielsweise um einen Mikroprozessor handeln.

Die Sensorvorrichtung 42 ist seitlich an dem Statorgehäuse 28 befestigt, was insbesondere in Figur 2 zu sehen ist.

Die Befestigung des Sensorgehäuses 48 am Statorgehäuse 28 kann beispielsweise mittels eines Halters 50 und/oder Befestigungseinrichtungen wie Schrauben geschehen. Alternativ kann das Sensorgehäuse 48 auch an das Statorgehäuse 28 geklebt oder genietet sein.

Um die Kupplungsposition der Schaltmuffe 16 bestimmen zu können, ist die Sensorvorrichtung 42 in einer radialen oder axialen Richtung mit einem Spalt beabstandet zur Schaltmuffe 16 am Statorgehäuse 28 befestigt.

Durch eine Axialbewegung der Schaltmuffe 16 wird das Magnetfeld M des Magneten 46 beeinflusst, so dass sich die Feldlinienwinkel des Magnetfelds M verändern. Die Änderung der Feldlinienwinkel wird vom Hall-Sensor 44 durch die Änderung des Magnetfelds M, und somit des Magnetflusses, detektiert.

Nachfolgend sollen die Funktionsweise und der Betrieb der Formschlusskupplung 10 sowie die Bestimmung der Kupplungsposition der Schaltmuffe 16 mittels der Sensorvorrichtung 42 beschrieben werden.

Den Ausgangszustand bildet hierbei die Auskupplungsposition der Schaltmuffe 16, wie in Figuren 1, 6A und 8 gezeigt.

Es liegt dabei kein Formschluss zwischen der ersten Verzahnung 18 der Schaltmuffe 16 und der zweiten Verzahnung 22 des Kupplungskörpers 20 vor.

Die Schaltmuffe 16 wird in diesem ausgekuppelten und geöffneten Zustand durch die elastische Federeinheit 40 gehalten, solange keinerlei äußeren Kräfte auf die Schaltmuffe 16 wirken, deren Betrag die Federkraft der Federeinheit 40 übersteigt.

Man spricht auch von einer Formschlusskupplung 10, die "normally open" ist.

Solange sich die Schaltmuffe 16 in der Auskupplungsposition befindet, verändert sich das Magnetfeld M nicht und von dem Hall-Sensor 44 der Sensorvorrichtung 42 wird ein konstanter Feldlinienwinkel α erfasst.

Die Änderung des Magnetfelds M hat neben der Änderung des Feldlinienwinkels α auch eine Änderung der Magnetflussstärke, also der Intensität zur Folge, wodurch von dem Hall-Sensor 44 eine Hall-Spannung detektiert wird. Basierend auf der Hall-Spannung kann die Auswerteeinheit 47 den Feldwinkel α bestimmen.

Zwar kommt es nicht zu einer Änderung des Magnetfelds M während sich die Schaltmuffe 16 in der Auskupplungsposition befindet, aber dennoch befindet sich der Hall-Sensor 44 in einem Magnetfluss, der eine Hall-Spannung verursacht, sodass auch ohne eine Axialverschiebung, das heißt unabhängig davon ob sich die Schaltmuffe 16 bewegt, der Feldlinienwinkel α bestimmt werden kann.

Soll die Schaltmuffe 16 aus der Auskupplungsposition hin zum Kupplungskörper 20 verschoben werden, so muss zuerst eine ausreichende Spannung an die Antriebsspule 30 angelegt werden.

Das Bestromen der Antriebsspule 30 erfolgt dabei über eine Steuerung 56, welche für jegliche Kupplungsvorgänge verantwortlich ist und auch die Signale der Sensorvorrichtung 42 verarbeitet (siehe Figur 4).

Dementsprechend ist die Steuerung 56 sowohl mit der Antriebsspule 30 als auch mit der Sensorvorrichtung 42 verbunden, wobei die Steuerung 56 und die Sensorvorrichtung 42 zumindest signaltechnisch miteinander verbunden sind.

Die Verbindung der Steuerung 56 mit der Sensorvorrichtung 42 erfolgt vorzugsweise mittels Kabeln, Leitungen 52 und/oder Steckern.

Das Bestromen der Antriebsspule 30 sorgt für einen magnetischen Fluss, durch den eine magnetische Kraft auf die Schaltmuffe 16 in Richtung des Kupplungskörpers 20 wirkt.

Übersteigt der Betrag der magnetischen Kraft den Betrag der Federkraft, die durch die Federeinheit 40 auf die Schaltmuffe 16 wirkt, so kommt es zu einer Bewegung der Schaltmuffe 16 hin zum Kupplungskörper 20.

Die Verschiebung der Schaltmuffe 16 hat zur Folge, dass sich das Magnetfeld M des Magneten 46 verändert wodurch es auch zu einer Änderung der Feldlinienwinkel in Bezug auf den Hall-Sensor 44 kommt.

Durch die Veränderung des Magnetfelds M, kommt es zu einer Änderung des Magnetflusses und somit vom Hall-Sensor 44 detektierten der Hall-Spannung, basierend auf der die Steuer- und Auswerteinheit 47 auf den Feldlinienwinkel α schließen kann.

Die Auswerteeinheit 47 leitet den ermittelten Feldlinienwinkel α wieder an die Steuerung 56 weiter, die basierend auf dem Feldlinienwinkel α der Schaltmuffe 16 eine eindeutige Position zuordnen kann.

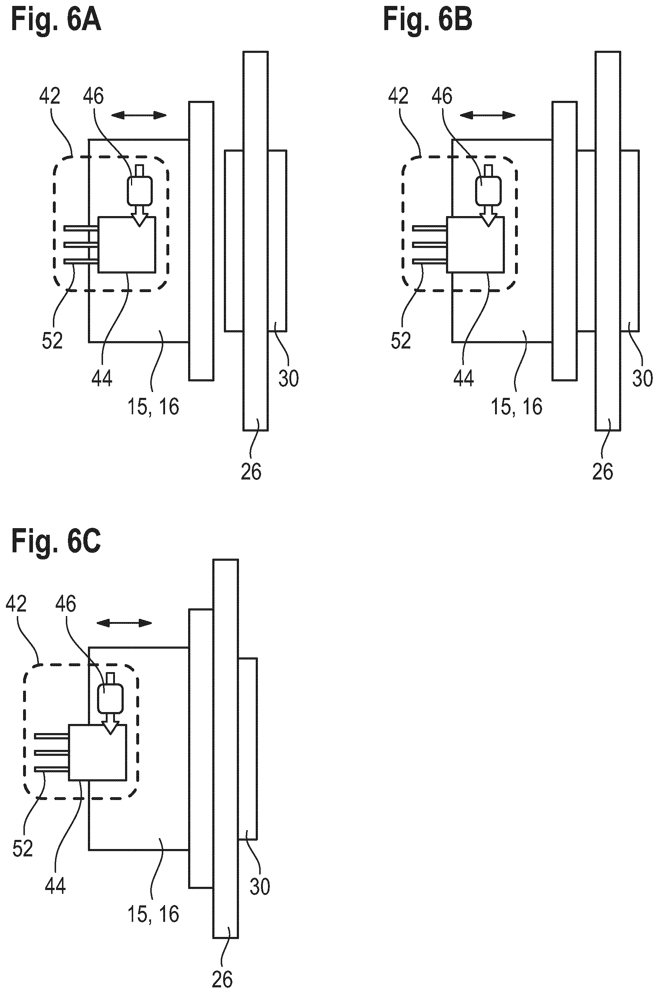

Damit befindet sich die Schaltmuffe 16 nach der in Figur 6B gezeigten Kupplungsposition schließlich in der in Figuren 6C und 7B gezeigten Einkupplungsposition. Bei bestromter Antriebsspule 30 wirkt dabei eine magnetische Haltekraft auf die Schaltmuffe 16.

Damit auch wirklich jede Position der Schaltmuffe 16 zwischen der Auskupplungsposition und der Einkupplungsposition bestimmt werden kann, besteht die Schaltmuffe 16 vorzugsweise aus einem ferromagnetischen Material.

In der Einkupplungsposition greifen die erste Verzahnung 18 und die zweite Verzahnung 22 ineinander, sodass ein Formschluss zwischen der Schaltmuffe 16 und dem Kupplungskörper 20 vorliegt.

Während sich die Schaltmuffe 16 in der Einkupplungsposition befindet, verändert sich der Spalt zwischen der Sensorvorrichtung 42 und der Schaltmuffe 16 nicht, sodass auch keine Änderung der Hall-Spannung von den Hall-Sensoren 44 detektiert werden kann.

Soll die Schaltmuffe 16 nun zurück in ihre Auskupplungsposition verschoben werden, so muss zunächst die magnetische Kraft, welche durch die Bestromung der Antriebsspule 30 erzeugt wird, reduziert oder aufgehoben werden.

Ist der Betrag der magnetischen Kraft, die auf die Schaltmuffe 16 wirkt, unterhalb des Betrags der Rückstellkraft durch die elastische Federeinheit 40, die auf die Schaltmuffe 16 wirkt, so hat dies eine Verschiebung der Schaltmuffe 16 aus der Einkupplungsposition zurück in die Auskupplungsposition zur Folge.

In diesem Zustand wird die Schaltmuffe 16 durch die Federkraft der elastischen Federeinheit 40 gehalten.

Beim Verschieben der Schaltmuffe 16 von der Einkupplungsposition zur Auskupplungsposition, verändert sich aufgrund der Axialbewegung der Schaltmuffe 16 das Magnetfeld M wieder, und es wird wieder der Feldlinienwinkel α über die Hall-Spannung aufgrund des sich ändernden Magnetflusses von der Sensorvorrichtung 42 detektiert.

Nicht gezeigt in den Figuren ist eine Ausführungsform, bei der die Sensorvorrichtung 42 ein weichmagnetisches Material aufweist, das neben dem Magneten 46 auf der dem Hall-Sensor 44 gegenüberliegenden Seite oder unter dem Magneten 46 auf dessen zu der Schaltmuffe 16 bzw. dem beweglichen Teil 15 weisenden Seite angeordnet ist.

Durch das Vorsehen eines solchen weichmagnetischen Materials, das dem Magneten 46 zugeordnet ist, kann der Magnetfluss des Magneten 46 geführt und somit das Magnetfeld M verstärkt werden, wodurch unerwünschte Änderungen des Hall-Effekts aufgrund dem Magnetfeld der Antriebsspule 30 verhindert bzw. minimiert werden können. Zudem kommt es zu größeren Änderungen des Feldlinienwinkels α, wenn ein stärkeres Magnetfeld M vorhanden ist.

Bei dem weichmagnetischen Material kann es sich beispielsweise um ferromagnetische Metalle oder Metalloxide handeln.

Ebenfalls nicht gezeigt in den Figuren ist eine Ausführungsform der Formschlusskupplung 10, bei der zwei Sensorvorrichtungen 42 vorgesehen sind.

Die Ausführung der Sensorvorrichtung 42 sowie die Bestimmung der Position der Schaltmuffe 16 ändern sich dabei nicht.

Bei der Ausführungsform der Formschlusskupplung 10 mit zwei Sensorvorrichtungen 42, sind die Sensorvorrichtungen 42 in Umfangsrichtung zueinander versetzt angeordnet, wobei die zwei Sensorvorrichtung 42 vorzugsweise jedoch nicht um 180° zueinander versetzt sind.

Durch eine Bestimmung der Kupplungsposition der Schaltmuffe 16 mit wenigstens zwei Sensorvorrichtungen 42 kann neben der aktuellen Kupplungsposition auch erkannt werden, ob die Schaltmuffe 16 leicht gekippt ist.

Ist dies der Fall, so kann die Steuerung 56 einen entsprechenden Steuerungsbefehl ausgeben, der die Schaltmuffe 16 wieder senkrecht zur ersten Welle 12 ausrichtet.

In Figur 9 ist eine weitere Ausführungsform der Sensorvorrichtung 42 gezeigt, die ebenfalls verwendet werden kann, um die Kupplungsposition der Schaltmuffe 16 zu bestimmen.

Die hier gezeigte Sensorvorrichtung 42 umfasst zwei Magnete 46, die jeweils eine magnetische Achse B haben und schräg in Bezug auf die Mittelachse A des Hall-Sensors 44 angeordnet sind. Dabei sind die magnetischen Achsen B aufeinander zu gerichtet und relativ zur Mittelachse A in einem spitzen Winkel angeordnet.

Vorzugsweise sind die beiden Magnete 46 in Bezug auf die Mittelachse A unsymmetrisch zueinander ausgerichtet, wobei der Winkel zwischen den magnetischen Achsen B und der Mittelachse A jeweils kleiner als 45° ist.

Durch eine solche Anordnung der Magnete 46 kann ein möglichst starkes Magnetfeld M erzeugt werden, so dass Änderungen des Magnetfelds M zu einer großen Feldlinienänderung führen. Dementsprechend kann das vom Hall-Sensor 44 detektierte Signal verstärkt werden, so dass eine höhere Auflösung erreicht werden kann.

Gemäß einer weiteren nicht gezeigten Ausführungsform umfasst die Sensorvorrichtung 42 wenigstens zwei Hall-Sensoren 44, wobei jedem der Hall-Sensoren 44 ein Magnet 46 zugeordnet ist. Durch die Verwendung von zwei Hall-Sensoren 44 können die Feldlinienwinkel an mehreren Stellen gemessen werden, so dass ein genaueres Ergebnis und somit eine präzisere Positionsbestimmung der Schaltmuffe 16 erreicht werden kann.

In einer alternativen Ausführungsform umfasst die Sensorvorrichtung 42 ebenfalls wenigstens zwei Hall-Sensoren 44. Allerdings ist hier nicht jedem der Hall-Sensoren 44 ein eigener Magnet 46 zugeordnet.

Während in den Figuren eine Formschlusskupplung 10 mit einem Kupplungskörper 20 beschrieben wurde, kann die Sensorvorrichtung 42 auch bei einer zweiseitigen Formschlusskupplung 10 verbaut werden.

Alternativ kann die Formschlusskupplung 10 zwei Sensorvorrichtungen 42 umfassen, welche jeweils einer Seite der Schaltmuffe 16 zugeordnet sind.

Die dargestellte Formschlusskupplung 10 zeichnet sich dadurch aus, dass keine Anbauteile an der Schaltmuffe 16 angebracht werden müssen, um die Position der Schaltmuffe 16 detektieren zu können.

## Patentansprüche

1. Elektromagnetisch schaltbare Formschlusskupplung (10), mit
einem axial beweglichen, angetriebenen Teil (15), das drehfest auf einer Welle (12) angeordnet ist und entlang der Welle (12) linear zwischen einer Einkupplungsposition und einer Auskupplungsposition verschiebbar ist,
wenigstens einem axial feststehenden, anzutreibenden Teil (21), das koaxial zur Welle (12) ausgerichtet ist,
einem Stator (26) mit wenigstens einer bestrombaren Antriebsspule (30) zur Verstellung des beweglichen Teils (15) entlang der Welle (12),
wobei in der Einkupplungsposition ein Formschluss zwischen dem beweglichen Teil (15) und dem feststehenden Teil (21) und damit eine Drehverbindung zwischen der Welle (12) und dem feststehenden Teil (21) vorliegt, und
einer angrenzend an das bewegliche Teil (15) angeordneten, stationären Sensorvorrichtung (42), die wenigstens einen Hall-Sensor (44) und wenigstens einen Magnet (46) umfasst, der neben und bleibend ortsfest zum wenigstens einen Hall-Sensor (44) angeordnet ist,
wobei die Sensorvorrichtung (42) in einer axialen oder radialen Richtung mit einem Spalt beabstandet zu dem beweglichen Teil (15) angeordnet ist und der Hall-Sensor (44) so ausgebildet ist, dass er eine Verschiebung des beweglichen Teils (15) über eine Änderung eines Feldlinienwinkels (α) eines durch den Magneten (46) erzeugten Magnetfelds (M) erfassen kann.

2. Elektromagnetisch schaltbare Formschlusskupplung (10) nach Anspruch 1, **dadurch gekennzeichnet, dass** der Hall-Sensor (44) eine Auswerteeinheit (47) integriert hat, wobei die Auswerteeinheit (47) eingerichtet ist, den Feldlinienwinkel (α) des durch den Magneten (46) erzeugten Magnetfelds (M) zu bestimmen und an eine Steuerung (56) der elektromagnetisch schaltbaren Formschlusskupplung (10) weiterzuleiten.

3. Elektromagnetisch schaltbare Formschlusskupplung (10) nach einem der Ansprüche 1 und 2, **dadurch gekennzeichnet, dass** der Hall-Sensor (44) zwei Messpunkte umfasst, insbesondere wobei der Feldlinienwinkel (α) einem Mittelwert der beiden Messpunkte entspricht.

4. Elektromagnetisch schaltbare Formschlusskupplung (10) nach einem der vorhergehenden Ansprüche, **dadurch gekennzeichnet, dass** die Sensorvorrichtung (42) zwei Magnete (46) umfasst, wobei der Hall-Sensor (44) zwischen den beiden Magneten (46) angeordnet ist.

5. Elektromagnetisch schaltbare Formschlusskupplung (10) nach Anspruch 4, **dadurch gekennzeichnet, dass** die zwei Magnete (46) jeweils eine magnetische Achse (B) haben und schräg in Bezug auf eine Mittelachse (A) des Hall-Sensors (44) angeordnet sind, wobei die magnetischen Achsen (B) aufeinander zu gerichtet sind und relativ zu der Mittelachse (A) in einem spitzen Winkel, bevorzugt in einem Winkel von weniger als 45°, angeordnet sind.

6. Elektromagnetisch schaltbare Formschlusskupplung (10) nach einem der vorhergehenden Ansprüche, **dadurch gekennzeichnet, dass** die Magnete (46) Permanentmagnete oder Elektromagnete sind.

7. Elektromagnetisch schaltbare Formschlusskupplung (10) nach einem der vorhergehenden Ansprüche, **dadurch gekennzeichnet, dass** die Sensorvorrichtung (42) wenigstens zwei Hall-Sensoren (44) umfasst, wobei vorzugsweise jedem der Hall-Sensoren (44) wenigstens ein Magnet (46) zugeordnet ist.

8. Elektromagnetisch schaltbare Formschlusskupplung (10) nach einem der vorhergehenden Ansprüche, **dadurch gekennzeichnet, dass** die Sensorvorrichtung (42) in einem Sensorgehäuse (48) aufgenommen ist, wobei das Sensorgehäuse (48) an einem Statorgehäuse (28) angebracht ist.

9. Elektromagnetisch schaltbare Formschlusskupplung (10) nach einem der vorhergehenden Ansprüche, **dadurch gekennzeichnet, dass** wenigstens zwei Sensorvorrichtungen (42) vorgesehen sind, wobei die wenigstens zwei Sensorvorrichtungen (42) in Umfangsrichtung des Stators (26) zueinander versetzt angeordnet sind.

10. Elektromagnetisch schaltbare Formschlusskupplung (10) nach einem der vorhergehenden Ansprüche, **dadurch gekennzeichnet, dass** dem Magneten (46) ein weichmagnetisches Material zugeordnet ist, wobei das weichmagnetische Material neben dem Magneten (46) auf der dem Hall-Sensor (44) gegenüberliegenden Seite oder unter dem Magneten (46) auf dessen zu dem beweglichen Teil (15) weisenden Seite angeordnet ist.

11. Verfahren zur Positionsbestimmung eines beweglichen Teils (15) einer elektromagnetisch schaltbaren Formschlusskupplung (10) nach einem der vorhergehenden Ansprüche, mit den folgenden Schritten:
- Erfassen einer Hall-Spannung mittels eines Hall-Sensors (44);
- Berechnen eines Feldlinienwinkels (α) mittels einer im Hall-Sensor (44) integrierten Auswerteeinheit (47);
- Weiterleiten des Feldlinienwinkels (α) an eine Steuerung (56) der elektromagnetisch schaltbaren Formschlusskupplung (10); und
- Zuordnung einer eindeutigen Position des beweglichen Teils (15) basierend auf dem berechneten Feldlinienwinkel (α) mittels der Steuerung (56).

12. Verfahren nach Anspruch 11, **dadurch gekennzeichnet, dass** die Position des beweglichen Teils (15) von mehreren Hall-Sensoren (44), insbesondere von entlang des Umfangs eines Stators (26) zueinander versetzten Hall-Sensoren (44), bestimmt wird, wobei die bestimmten Positionen von der Steuerung (56) miteinander verglichen werden.

13. Verfahren nach Anspruch 12, **dadurch gekennzeichnet, dass** der Feldlinienwinkel (α) für jede Position des beweglichen Teils (15) der elektromagnetisch schaltbaren Formschlusskupplung (10) bestimmt wird.
